# EUROPÄISCHE PATENTSCHRIFT

(11) **EP 3 663 068 B1**
(45) Veröffentlichungstag und Bekanntmachung des Hinweises auf die Patenterteilung: **12.10.2022**
(21) Anmeldenummer: 19211769.5
(22) Anmeldetag: 27.11.2019
(51) Int. Cl.: B29C 45/76

(54) **SPRITZGIESSMASCHINE MIT SPEKTROMETER**
INJECTION MOULDING MACHINE COMPRISING A SPECTROMETER
MACHINE DE MOULAGE PAR INJECTION COMPRENANT UN SPECTROMÈTRE

(30) Priorität: 04.12.2018 DE 102018130796
(43) Veröffentlichungstag der Anmeldung: 10.06.2020
(73) Patentinhaber: MHT Mold & Hotrunner Technology AG, 65239 Hochheim (DE)
(72) Erfinder: TILSNER, Christian, 64331 Weiterstadt (DE); SCHRÖDER, Thomas, 64297 Darmstadt (DE)
(74) Vertreter: WSL Patentanwälte Partnerschaft mbB

(56) Entgegenhaltungen:
- WO-A2-2013/011262
- CH-A5- 667 843
- CN-A- 108 705 751
- JP-A- H01 195 013
- DUMITRESCU O R ET AL: "Near infrared spectroscopy for in-line monitoring during injection moulding", POLYMER TESTING, ELSEVIER, AMSTERDAM, NL, Bd. 24, Nr. 3, 1. Mai 2005 (2005-05-01), Seiten 367-375, XP004751829, ISSN: 0142-9418, DOI: 10.1016/J.POLYMERTESTING.2004.10.003
- GHITA O R ET AL: "An in-line near-infrared process control tool for monitoring the effects of speed, temperature, and polymer colour in injection moulding", POLYMER TESTING, ELSEVIER, AMSTERDAM, NL, Bd. 27, Nr. 4, 1. Juni 2008 (2008-06-01), Seiten 459-469, XP022664568, ISSN: 0142-9418, DOI: 10.1016/J.POLYMERTESTING.2008.01.010 [gefunden am 2008-02-15]

## Beschreibung

Die vorliegende Erfindung betrifft eine Plastifiziereinheit und insbesondere eine Spritzgießmaschine und ein Spritzgießwerkzeugteil.

Eine Spritzgießmaschine stellt aus Kunststoffgranulat Kunststoffteile her. Dazu wird in einer Spritzeinheit die benötigte Formmasse aufbereitet und in einen Formraum gespritzt, der eine Negativform des gewünschten Kunststoffteils darstellt. Spritzgießmaschinen weisen eine Plastifiziereinheit, die auch Spritzeinheit genannt wird, eine Schließeinheit und ein Werkzeug auf. Die Spritzeinheit bereitet das Rohmaterial auf und spritzt es in das Werkzeug ein. Die Schließeinheit nimmt das Werkzeug auf und öffnet und schließt es.

Das Spritzgießen ist eines der wichtigsten Verfahren zur Herstellung von Formlingen bzw. Formteilen. Hierbei wird die im Allgemeinen ursprünglich als Pulver oder Granulat vorliegende Formmasse erhitzt, plastifiziert und unter hohem Druck in ein entsprechendes Formwerkzeug gedrückt. Die Formmasse erstarrt in dem Formwerkzeug und wird anschließend dem geöffneten Werkzeug entnommen. Beispielsweise werden handelsübliche PET-Flaschen durch Streckblasformen eines Hohlkörperpreforms bzw. Hohlkörpervorformlings hergestellt. Dabei wird der Preform in einem ersten Schritt mittels Spritzgießen erstellt. Dass sich an den Spritzgießvorgang anschließende Streckblasformen kann entweder unmittelbar nach Herstellung des Preforms oder zu einem späteren Zeitpunkt erfolgen. Häufig wird gleichzeitig eine Vielzahl von Preforms hergestellt. Daher umfasst das Werkzeug eine Vielzahl von Formräumen. Diesen Formräumen muss die Schmelze, die von der Spritzeinheit bereitgestellt wird, über ein Kanalsystem zugeführt werden. Dieses Kanalsystem ist meist beheizt und wird auch als Heißkanal bezeichnet.

Häufig sind Ventile, wie z. B. Nadelventile vorgesehen, mit welchen die Verbindung zwischen Heißkanal und den Formräumen verschlossen oder geöffnet werden kann.

Alternativ werden auch Spritzprägeverfahren eingesetzt. Spritzprägen ist ein spezielles Spritzgießverfahren, bei dem die Formmasse in das nicht ganz geschlossene Werkzeug eingespritzt wird.

Fast alle Kunststoffe und insbesondere Polyethylenterephthalat (PET) erfahren bei hohen Temperaturen eine thermische Schädigung. Häufig kommt es zu einer thermo-chemischen Spaltung der Moleküle. Es entstehen kurzkettige Spaltprodukte. Der Anteil an Spaltprodukten ist im Allgemeinen nicht nur von der Verarbeitungstemperatur, sondern auch vom Verarbeitungsdruck und der Verweilzeit abhängig. Gerade bei der Verwendung eines Heißkanalsystems besteht diese Gefahr insbesondere bei langen Zykluszeiten.

So entstehen beispielsweise durch die Erwärmung und die Plastifizierung von PET zwangsläufig geringe Mengen an Acetaldehyd. Dieses Acetaldehyd kann der fertige PET-Kunststoff, d.h. die PET-Flasche in die aufgenommene Flüssigkeit abgeben. Acetaldehyd ist in den hier üblicherweise auftretenden Konzentrationen gesundheitlich unbedenklich, zumal Acetaldehyd auch ein natürlicher Bestandteil von Früchten ist. Allerdings hat das Acetaldehyd einen Geruch, der beim Konsum der in der PET-Flasche aufbewahrten Flüssigkeit in der Regel nicht gewünscht ist. Insbesondere dann, wenn Mineralwasser in PET-Flaschen abgefüllt wird, akzeptiert der Verbraucher und damit auch der Flaschenhersteller nur eine sehr geringe Konzentration an Acetaldehyd.

Die Konzentration an Acetaldehyd in PET hängt jedoch von einer Vielzahl von unterschiedlichen Faktoren ab. So spielt nicht nur die Qualität des verwendeten Granulats eine Rolle, sondern beispielsweise auch die Druck- und Temperaturverhältnisse innerhalb der Schnecke, dem Heißkanal und dem eigentlichen Formwerkzeug. Insgesamt gibt es Dutzende von Parametern, die einen Einfluss auf die Verarbeitbarkeit der Schmelze und damit auch auf den Anteil der Spaltprodukte haben.

Grundsätzlich müssen u. a. Temperatur, Druck und Verweildauer der plastifizierten Schmelze in Schnecke, Heißkanal und Formwerkzeug in Abhängigkeit von dem verwendeten Granulat in einem Verarbeitungsfenster gehalten werden, um die Verarbeitbarkeit der Schmelz zu gewährleisten. Innerhalb des Verarbeitungsfensters können die Parameter variiert werden, ohne dass eine nennenswerte Verschlechterung der Verarbeitbarkeit festgestellt wird. Sehr wohl kann diese Variation aber den Anteil an Spaltprodukten beeinflussen. Daher müssen die Parameter optimiert werden, um die Acetaldehydkonzentration gering zu halten.

In der Praxis bedeutet dies, dass bei der Herstellung von PET-Preforms jeder Charge, die durchaus aus mehreren Tausend Preforms bestehen kann, ein Preform entnommen wird und anhand dieses Preforms mit Hilfe eines gaschromatischen Verfahrens der Acetaldehydgehalt bestimmt wird. Doch selbst wenn die modernsten Gaschromatographen vor Ort bereitstehen, dauert es mindestens 30 Minuten bis das Messergebnis vorliegt.

Während dieser Zeit werden bereits Preforms der nächsten Charge hergestellt. Sollte sich bei der gaschromatographischen Bestimmung des Acetaldehydgehaltes herausstellen, dass dieser zu hoch ist, müssen alle Preforms dieser Charge sowie der bereits laufenden Charge als Ausschuss gekennzeichnet werden und die Prozessparameter innerhalb des Verarbeitungsfensters angepasst werden.

Auch wenn ein Überschreiten der Acetaldehydkonzentration in der Regel nur selten vorkommt, sind der in diesem Fall notwendige Produktionsstopp sowie die große Anzahl von Ausschusspreforms von Nachteil.

Dumitrescu et. al. beschreibt daher in "Near-infrared spectroscopy for in-line monitoring during injection moulding" in Polymer Testing 24 (2005) ein Spektroskopieverfahren, welches an Spritzgießmaschinen zum Einsatz kommt, um direkt die Qualität der plastifizierten Schmelze zu überwachen. Ein ähnliches Verfahren wird auch von Ghita et. al in "An in-line near infrared process control tool for monitoring the effects of speed, temperature, and polymer colour in injection moulding" in Polymer Testing 27 (2007) beschrieben.

In der WO 2013/011262 A2 wird zudem eine Spritzgießdüse beschrieben, die mit einem Sensor ausgestattet ist, der ebenfalls Materialeigenschaften der austretenden plastifizierten Schmelze überwacht. Zudem wird in der CH 667 843 A5 ein Verfahren und eine Vorrichtung zur Überwachung des Füllvorgangs und/oder der Entformung in Spritzgieß- oder Presswerkzeugen beschrieben, wobei in einer Formkavität oder und/oder den Angusskanälen entsprechende optische Fühler verbaut sind, die das Vorhandensein einer Formmasse detektieren. Aus der JP H 01 195013 A ist außerdem bekannt, die Temperatur der Formmasse während dem Spritzgießverfahren mittels Ultraschallsensoren zu überwachen.

Aus der CN 108705751 A ist ein Verfahren bekannt, um die Orientierung von Makromolekülen in Materialien zu untersuchen, die in einem Spritzgießverfahren hergestellt wurden.

Ausgehend von dem beschriebenen Stand der Technik ist es daher Aufgabe der vorliegenden Erfindung eine Spritzgießmaschine bzw. ein Spritzgießwerkzeugteil sowie ein Verfahren bereitzustellen, mit welchem leicht überprüft werden kann, ob die Konzentration von Spaltprodukten, wie z.B. Acetaldehyd, unterhalb eines bestimmten Grenzwertes liegt.

Erfindungsgemäß wird diese Aufgabe durch eine Spritzgießmaschine mit den Merkmalen von Anspruch 1 gelöst.

In einer bevorzugten Ausführungsform ist ein Sender und ein Empfänger vorgesehen, die derart ausgebildet und angeordnet sind, dass von dem Sender eine Welle in eine im Kanal aufgenommene plastifizierte Schmelze ausgestrahlt werden kann und von dem Empfänger die durch die plastifizierte Schmelze transmittiert oder von der plastifizierten Schmelze reflektierte Welle detektiert werden kann.

Die Idee, die hinter der Erfindung steckt ist die, dass in die plastifizierte Schmelze eine Welle eingebracht wird, die durch die Schmelze transmittiert, absorbiert oder reflektiert wird. Durch den absorbierten Anteil lassen sich Rückschlüsse auf den molekularen Aufbau der Schmelze ziehen, da möglicherweise Rotations-, Schwingungs- und/oder Elektronenzustände in den Molekülen der Schmelze angeregt worden sind. Es ist auch möglich, lediglich die Emission von Wellen zu erfassen, d. h. den Kunststoff selbst als Strahlungsquelle zu verwenden. Allerdings ist diese Emissionsspektroskopie stark temperaturabhängig. Vorzugsweise ist der Empfänger zur Messung der Amplitude der detektierten Welle ausgelegt.

Erfindungsgemäß ist vorgesehen, dass der Empfänger dafür ausgelegt und eingerichtet ist, die Strahlungsintensität einer Welle einer vorbestimmten Frequenz zu messen.

Die beschriebene Detektion kann prinzipiell am festen Kunststoff erfolgen. Besonders bevorzugt erfolgt die Detektion jedoch an der Schmelze. Daher ist in einer bevorzugten Ausführungsform eine Heizvorrichtung vorgesehen, mit welcher der Kanal beheizt werden kann, sodass ein Erstarren eines in dem Kanal aufgenommenen geschmolzenen Kunststoffes verhindert werden kann.

Da die Anregungszustände frequenzabhängig sind, ist in einer besonderen Ausführungsform vorgesehen, dass der Sender dafür ausgelegt ist, mehrere Wellen mit unterschiedlicher Frequenz gleichzeitig oder nacheinander auszustrahlen, und der Empfänger dafür ausgelegt ist, mehrere Wellen mit unterschiedlicher Frequenz gleichzeitig oder nacheinander zu detektieren, wobei vorzugsweise die Strahlungsintensitäten der mehreren Wellen mit unterschiedlicher Frequenz erfasst werden.

Anhand des transmittierten oder reflektierten Anteils können dann Rückschlüsse auf die Anregungszustände der plastifizierten Schmelze gezogen werden. Steht jedoch bereits fest, welches Spaltprodukt nachgewiesen werden soll und welchen Einfluss das Spaltprodukt auf Strahlung bestimmter Frequenzen hat, genügt es in manchen Fällen, nur monofrequente Strahlung vom Sender zu emittieren und vom Sender zu detektieren.

Das Spritzgießwerkzeugteil kann eine Plastifiziereinheit, z.B. eine Spritzgießschnecke sein. In diesem Fall ist der Sender und Empfänger derart angeordnet, dass er den Kanal am Ausgang der Spritzgießschnecke erfasst, da dort die Schmelze bereits plastifiziert ist und der größte Spaltproduktanteil innerhalb der Spritzgießschnecke hier zu erwarten ist.

Sollte sich bei der kontinuierlichen Messung des Spaltproduktgehaltes feststellen, dass der Gehalt ansteigt, können dann die Prozessparameter der Spritzgießschnecke geändert werden. Beispielsweise könnte die Aufheiztemperatur abgesenkt werden oder der von der Schnecke aufgebrachte Druck abgesenkt oder erhöht werden. Weiterhin ist es möglich, die Temperatur eines vor der Plastifiziereinheit angeordneten Trockner zur Vorbehandlung des zu plastifizierenden Granulats in Abhängigkeit von dem Spaltproduktgehalt zu verändern.

Alternativ dazu kann das Spritzgießwerkzeugteil ein Heißkanal sein. In diesem Fall sollte der Sender und Empfänger derart angeordnet sein, dass die ausgestrahlte Welle in zumindest einem Abschnitt des Heißkanals durch den Kunststoff und zwar vorzugsweise durch den flüssigen Kunststoff läuft und dann der transmittierte oder reflektierte Anteil der Welle vom Empfänger detektiert wird.

Die Erfassung des Spaltproduktgehaltes im Heißkanal hat gegenüber der Erfassung in der Spritzgießschnecke den Vorteil, dass hier der Spaltproduktgehalt in der Regel größer und daher leichter detektierbar ist. Zudem entspricht der hier detektierte Gehalt eher dem im Formling zu erwartenden Gehalt. Allerdings kann an dieser Position nicht mehr festgestellt werden, ob die Ursache des hohen Gehaltes an schlechten Prozessparamatern der Spritzeinheit oder des Heißkanales liegt.

Schließlich ist es in einer bevorzugten Ausführungsform auch möglich, das Spritzgießwerkzeugteil als Formwerkzeug auszugestalten, sodass der Kanal Teil des Formraums ist und Empfänger und Sender den Kunststoff im Formraum bestrahlen bzw. erfassen. Diese Position hat den Vorteil, dass der Spaltproduktgehalt direkt am Preform bestimmt werden kann. Die Bestimmung kann am erstarrten Preform oder - vorzugsweise - am noch flüssigen Preform erfolgen. Allerdings weist ein Formwerkzeug häufig eine Vielzahl, z.B. 96 Formräume auf, in welche plastifizierte Schmelze eingespritzt wird. Es ist daher nicht praktikabel, in allen Formräumen einen entsprechenden Sender und Empfänger anzuordnen. In der Regel ist es aber ausreichend, lediglich in einem Formraum eine entsprechende Welle einzustrahlen und zu detektieren und dann anzunehmen, dass in den anderen Formräumen ein ähnlicher Spaltproduktgehalt vorliegt.

In einer bevorzugten Ausführungsform ist die Welle eine akustische Welle und zwar vorzugsweise eine Ultraschallwelle. Mit Hilfe der sogenannten Ultraschallspektroskopie oder Ultraschalldämpfungsspektroskopie, ggf. in Kombination mit der Ultraschalldilatation können Eigenschaften der plastifizierten Schmelze erfasst werden. Allerding ist dieses Verfahren nur für hohe Spaltproduktkonzentrationen geeignet.

Insbesondere bei kleinen Spaltproduktkonzentrationen ist eine elektromagnetische Welle und zwar vorzugsweise eine Infrarotwelle besser geeignet. Durch die Wechselwirkung der elektromagnetischen Welle mit den Molekülen in der plastifizierten Schmelze kommt es zu Anregungen von Rotations-, Schwingungs- und Elektronenzuständen in den Molekülen. Dadurch können die atomaren Bestandteile sowie molekulare Eigenschaften wie Bindungslängen und Bindungsstärken identifiziert werden.

Grundsätzlich sind hier verschiedenste Molekülspektroskopiemethoden verwendbar, wie z.B. die Elektronenspinresonanz, die Fluoreszenzspektroskopie, die Kernresonanzspektroskopie oder die UV/VIS-Spektroskopie. Besonders bevorzugt ist jedoch die Infrarotspektroskopie, da diese relativ kostengünstig verwirklicht werden kann und keine Schutzmaßnahmen aufgrund der verwendeten Strahlung ergriffen werden müssen.

Sender oder Empfänger ggf. sogar Sender und Empfänger können innerhalb des Kanals angeordnet sein. Dies hat den Vorteil, dass kein störendes Fenster und keine Wand des Kanals die Wellen schwächen. Sender und/oder Empfänger werden am besten von der Schmelze umströmt. Es muss dann allerdings dafür Sorge getragen werden, dass die entsprechenden elektrischen Anschlüsse in den Kanal geführt werden.

Falls das Spritzgießwerkzeugteil ein Formwerkzeug ist, können Sender und Empfänger nicht innerhalb des Formraums angeordnet sein, da diese dann innerhalb des erstarrten Formteils verloren wären.

In einer weiteren bevorzugten Ausführungsform weist der Kanal zumindest ein Fenster auf, welches für die elektromagnetische Welle transparent ist, sodass Sender und/oder Empfänger außerhalb des Kanals positioniert sind und die elektromagnetische Welle über das Fenster in die plastifizierte Schmelze ausstrahlen bzw. die elektromagnetische Welle, die über das Fenster aus dem Kanal austritt, detektiert wird.

Erfindungsgemäß ist außerdem eine Auswerteeinheit vorgesehen, welche die vom Empfänger gemessene Strahlungsintensität auf Basis von zumindest einer Referenzmessung an einer plastifizierten Schmelze mit vorgegebenen Spaltprodukt-Gehalt beurteilt. Insbesondere dann, wenn die Referenzmessung an einem Kunststoff mit einem Spaltprodukt-Grenzgehalt vorgenommen worden ist, kann die Auswerteeinheit anhand der Strahlungsintensität feststellen, ob der Grenzgehalt überschritten worden ist oder nicht.

In einer weiteren bevorzugten Ausführungsform ist eine Auswerteeinheit vorgesehen, welche die vom Empfänger gemessene Strahlungsintensität auf Basis von zumindest zwei Referenzmessungen an Kunststoffen mit unterschiedlichem Spaltproduktgehalt in einen IST-Spaltproduktgehalt umrechnet.

Es ist dabei noch nicht einmal notwendig, dass die detektierten Spektren direkt Anregungszustände des Spaltproduktes, wie z.B. Acetaldehyd, detektieren. Gegebenenfalls lassen sich aufgrund der Anwesenheit des Acetaldehyds auch Anregungszustände anderer Moleküle erfassen, die zusammen mit dem Acetaldehyd entstehen. In diesem Fall wird der Acetaldehydgehalt nur indirekt gemessen.

Des Weiteren betrifft die vorliegende Erfindung ein Verfahren zur Bestimmung eines Spaltproduktgehaltes in einem Kunststoff. Dabei wird die eingangs genannte Aufgabe dadurch gelöst, dass der Kunststoff plastifiziert wird und die plastifizierte Schmelze durch einen Kanal geführt wird. Dabei wird eine vom Kunststoff reflektierte, transmittierte oder emittierte Welle erfasst und aus der erfassten Welle Rückschlüsse auf den Spaltproduktgehalt gezogen. Hierzu kommen alle obengenannten Spektroskopieverfahren in Frage. Am besten erfolgt die Detektion anhand eines flüssigen Kunststoff. Erfolgt die Messung stattdessen an einem erstarrten Kunststoff, muss sichergestellt werden, dass der erstarrte Kunststoff aus dem Werkzeugteil entfernt wird, bevor der nächste Spritzvorgang erfolgt.

Besonders bevorzugt wird die Schmelze in dem Kanal mit einer Welle bestrahlt, sodass die Welle im Kunststoff reflektiert wird und/oder durch den Kunststoff transmittiert, und die reflektierte oder die transmittierte Welle erfasst wird und aus der erfassten Welle Rückschlüsse auf den Spaltproduktgehalt gezogen werden.

In einer bevorzugten Ausführungsform ist der Kanal in einer Spritzgießmaschine angeordnet. Hierfür können beispielsweise die oben beschriebenen Spritzgießwerkzeugteile oder die oben beschriebene Spritzgießmaschinen verwendet werden.

In einer weiteren bevorzugten Ausführungsform ist vorgesehen, dass auf Basis des bestimmten Spaltproduktgehaltes die Spritzgießmaschine gestoppt oder Prozessparameter der Spritzgießmaschinen variiert werden. Zu den Prozessparametern der Spritzgießmaschine gehören auch Prozessparameter von möglicherweise vor- oder zwischengeschalteten Vorrichtungen zur Behandlung des noch nicht plastifizierten Granulates oder der plastifizierten Schmelze oder des erstarrten Preforms.

So kann beispielsweise, wenn der Spaltproduktgehalt einen ersten Grenzwert überschreitet, die Spritzgießmaschine gestoppt werden. In der Regel wird sich der Spaltproduktgehalt in der Schmelze nicht abrupt, sondern allmählich ändern. Daher könnte in einer bevorzugten Ausführungsform vorgesehen sein, die Prozessparameter der Spritzgießmaschine zu variieren, wenn der Spaltproduktgehalt einen zweiten Grenzwert überschreitet, der niedriger als der erste Grenzwert ist. Diese Ausführungsform hat den Vorteil, dass die Spritzgießmaschinen bereits bevor der erste Grenzwert erreicht wird versucht, dem Anstieg des Spaltproduktgehaltes entgegenzuwirken, indem die Prozessparameter, d.h. z.B. die Temperatur oder der Druck der Schmelze oder die Verweilzeit der Schmelze in der Spritzgießmaschine variiert wird.

Die besten Ergebnisse werden erzielt, wenn die Strahlungsintensität der Welle erfasst wird und aus der Strahlungsintensität Rückschlüsse auf den Spaltsproduktgehalt gezogen werden. Demzufolge ist es von Vorteil, wenn der Empfänger derart ausgebildet ist, dass er die Strahlungsintensität der Welle, vorzugsweise einer Welle mitvorbereitet Frequenz, erfassen kann. Anstelle der Strahlungsintensität kann auch jede Größe, die mit der Strahlungsintensität zusammenhängt, wie z.B. die Schwingungsamplitude, gemessen werden.

Weitere Vorteile, Merkmale und Anwendungsmöglichkeiten werden deutlich anhand der folgenden Beschreibung bevorzugter Ausführungsformen und der dazugehörigen Figuren. Es zeigen:
Figur 1 eine schematische Darstellung einer ersten Ausführungsform der Erfindung,
Figur 2 ein Ablaufdiagramm des erfindungsgemäßen Verfahrens und
Figur 3 eine schematische Darstellung einer zweiten Ausführungsform der Erfindung.

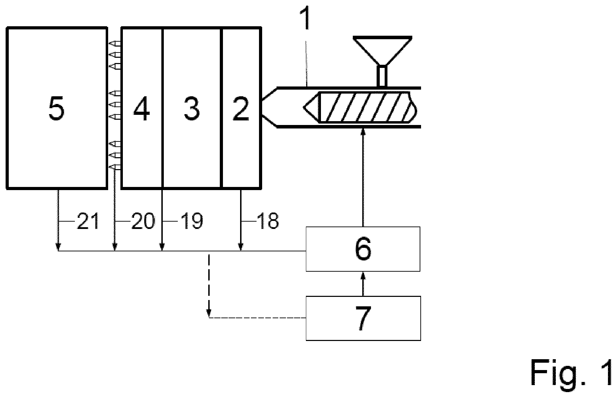

In Figur 1 ist eine schematische Darstellung einer ersten Ausführungsformen der Erfindung gezeigt. Eine Spritzgiessmaschine bestehend aus der als Plastifizierschnecke ausgebildeten Spritzeinheit 1, einer am Ausgang der Spritzeinheit 1 angeordneten Meßdüse 2, einer Abdeckplatte 3, eine Heißkanalplatte 4 und einem Formwerkzeug 5 ist zu erkennen. In der Spritzeinheit 1 wird das Kunststoffgranulat erhitzt und unter Druck gesetzt und damit plastifiziert. Die Schmelze wird über die Meßdüse 2 und die Abdeckplatte 3 in einen in der Heißkanalplatte 4 aufgenommenen Verteiler eingespritzt. In der Heißkanalplatte 4 sind Nadelventile angeordnet, über die die Schmelze in das Formwerkzeug 5 geleitet werden kann. Der plastifizierte Kunststoff liegt innerhalb der Meßdüse 2, der Abdeckplatte 3 und der Heißkanalplatte 4 als Schmelze vor. Diese Schmelze wird in das Formwerkzeug 5 übergeben und erstarrt dort um den fertigen Vorformling zu bilden. Die Bewegung des Formwerkzeuges 5 und die Zykluszeit werden von der Steuerung 7 festgelegt.

Erfindungsgemäß ist nun mindestens ein Empfänger zur Erfassung einer von der Schmelze emittierten, transmittierten oder reflektierten Strahlung vorgesehen. Dieser Empfänger kann in der Meßdüse 2, zwischen Abdeckplatte 3 und Heißkanalplatte 4, in der Heißkanalplatte 4 oder im Formwerkzeug 5 angeordnet sein. Die entsprechenden Meßsignale sind mit den Bezugszeichen 18, 19, 20 und 21 versehen. In der Regel ist ein Empfänger ausreichend. Es können jedoch auch mehrere Empfänger an unterschiedlichen Positionen angeordnet sein. Die entsprechenden Meßsignale 18,19, 20, 21 werden von einem Controller 6 ausgewertet und, wenn sich aus dem Meßsignal ergibt, dass der Gehalt des Spaltproduktes Acetaldehyd zu hoch ist, die Prozessparameter geändert, um den Spaltproduktgehalt zu reduzieren.

Bei der in Figur 1 gezeigte Ausführungsform erfolgt die Strahlungserfassung an der Schmelze, welche dem normalen Spritzgiesszyklus zur Verfügung steht. Das heißt, dass die Schmelze, an welcher die Messung vorgenommen worden ist, für den Herstellungsprozess verwendet wird.

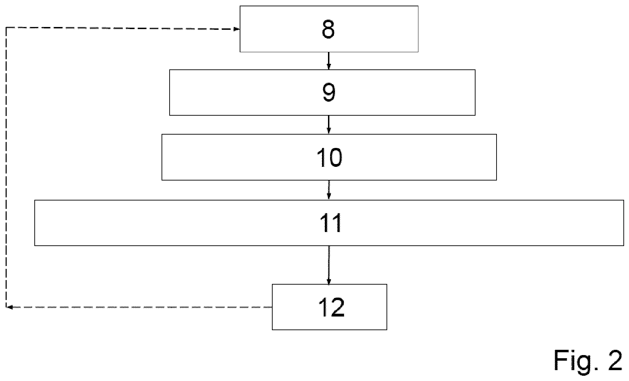

In Figur 2 ist ein Ablaufdiagramm des erfindungsgemäßen Verfahrens gezeigt. So wird erfindungsgemäß zunächst in dem Schritt 8 eine Strahlungsmessung durchgeführt. Aus dem Messergebnis wird diejenige Frequenz herausgefiltert, die mit der Anregung eines Energiezustandes innerhalb des Spaltsproduktes Acetaldehyd zusammenhängt. Die Intensität der Strahlung dieser Frequenz ist ein Maß für den Spaltproduktgehalt. Im Schritt 9 wird somit aus dem Messergebnis eine Information über die Qualität der verwendeten Kunststoffschmelze errechnet.

Diese Information wird der Auswerteeinheit 10 zur Verfügung gestellt, die in Schritt 11 die Prozessparameter, wie z.B. die Zykluszeit, die Heißkanaltemperatur, die Standzeit innerhalb der Spritzeinheit, usw. variiert, um den Gehalt an Acetaldehyd zu reduzieren. Die Variation kann im Trial-Error-Verfahren erfolgen, d. h. ein Prozessparameter wird willkürlich verändert in der Hoffnung, dass dies den Spaltproduktgehalt reduziert. Es können allerdings auch selbst lernende Systeme eingesetzt werden, die anhand der bei vorherigen Messungen festgestellten Variation des Spaltproduktgehalts in Abhängigkeit der Prozessparameter geeignete Prozessparameter Variationen vornehmen. Übersteigt der Spaltproduktgehalt einen bestimmten Grenzwert, werden die Vorformling als Ausschuss behandelt.

In Schritt 12 erfolgt dann ein neuer Spritzgießvorgang unter Verwendung der geänderten Prozessparameter.

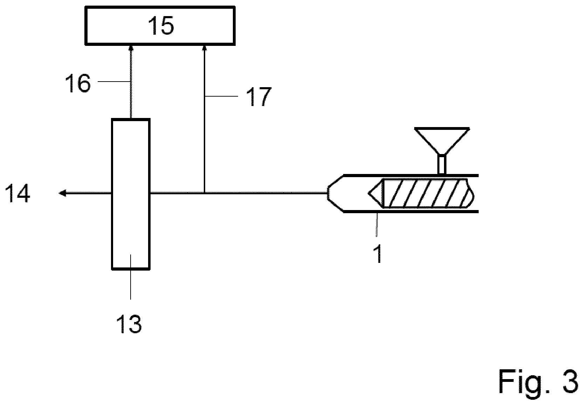

In Figur 3 ist eine schematische Darstellung einer zweiten Ausführungsform der Erfindung gezeigt.

Auch hier ist eine Spritzeinheit 1 und ein Heißkanal mit Formwerkzeug 13 vorgesehen. Die fertigen Preforms werden über die Polymerlinie 14 ausgegeben. Im Unterschied zu der in Figur eins gezeigte Ausführungsform ist hier eine Abzweigleitung 16,17 vorgesehen, über welche ein kleiner Teil der Kunststoffschmelze aus dem Zyklus abgezweigt wird und in der Messstation 15 mithilfe des Empfängers untersucht wird. Die Abzweigleitung 16,17 kann beispielsweise zwischen Spritzeinheit 1 und Heißkanal und Formwerkzeug 13 liegen, wie mit der Bezugszahl 17 dargestellt ist, oder kann innerhalb des Heißkanal oder des Formwerkzeuges angeordnet sein, wie mit der Bezugszahl 16 dargestellt ist.

Bei der in Figur 3 gezeigten Ausführungsform ist das in die Abzweigleitungen 16,17 abgezweigte Kunststoffmaterial verloren, d. h. es wird nicht wieder der Polymerlinie 14 zugeführt.

## Patentansprüche

1. Spritzgießmaschine, welche die Spritzgießwerkzeugteile Spritzgießschnecke, Heißkanal und Formwerkzeug aufweist und wobei mindestens ein Spritzgießwerkzeugteil einen Kanal zur Aufnahme von geschmolzenem Kunststoff aufweist und ein Empfänger vorgesehen ist, der derart ausgebildet und angeordnet ist, dass von dem Empfänger eine durch einen im Kanal aufgenommenen Kunststoff transmittierte Welle oder von einem im Kanal aufgenommenen Kunststoff reflektierte Welle oder von einem im Kanal aufgenommenen Kunststoff emittierte Welle detektiert werden kann, wobei der Empfänger eingerichtet ist, die Strahlungsintensität der transmittierten, reflektierten oder emittierten Welle zu messen, **dadurch gekennzeichnet, dass** eine Auswerteeinheit vorgesehen ist, welche geeignet ist, die vom Empfänger gemessene Strahlungsintensität auf Basis von zumindest einer Referenzmessungen an einem Kunststoff mit vorgegebenen Spaltprodukt-Gehalt zu beurteilen.

2. Spritzgießmaschine nach Anspruch 1, **dadurch gekennzeichnet, dass** der Empfänger eingerichtet ist, die Strahlungsintensität der transmittierten, reflektierten oder emittierten Welle einer vorbestimmten Frequenz zu messen.

3. Spritzgießmaschine nach Anspruch 1 oder 2, **dadurch gekennzeichnet, dass** der Kanal eine Heizvorrichtung aufweist, die derart ausgelegt ist, dass ein Erstarren eines in dem Kanal aufgenommenen geschmolzenen Kunststoff verhindert werden kann.

4. Spritzgießmaschine nach Anspruch 1, 2 oder 3, **dadurch gekennzeichnet, dass** ein Sender vorgesehen ist, der zusammen mit dem Empfänger derart ausgebildet und angeordnet ist, dass von dem Sender eine Welle in den im Kanal aufgenommenen Kunststoff ausgestrahlt werden kann und von dem Empfänger die durch den Kunststoff transmittierte oder von dem Kunststoff reflektierte Welle detektiert werden kann, wobei vorzugsweise der Sender dafür ausgelegt ist, mehrere Wellen mit unterschiedlicher Frequenz gleichzeitig oder nacheinander auszustrahlen, und der Empfänger dafür ausgelegt ist, mehrere Wellen mit unterschiedlicher Frequenz gleichzeitig oder nacheinander zu detektieren, wobei vorzugsweise Empfänger dafür ausgelegt ist, die Strahlungsintensitäten der mehreren Wellen mit unterschiedlicher Frequenz gleichzeitig oder nacheinander zu detektieren.

5. Spritzgießmaschine nach einem der Ansprüche 1 bis 4, **dadurch gekennzeichnet, dass** das Spritzgießwerkzeugteil eine Plastifizier- oder Spritzeinheit, eine Spritzgießschnecke, ein Heißkanal oder ein Formwerkzeug mit einem Formraum ist, wobei vorzugsweise der Kanal Teil des Formraums ist.

6. Spritzgießmaschine nach einem der Ansprüche 1-5, **dadurch gekennzeichnet, dass** die Welle eine akustische Welle, vorzugsweise eine Ultraschallwelle ist, oder eine elektromagnetische Welle, vorzugsweise eine Infrarotwelle, ist.

7. Spritzgießmaschine nach einem der Ansprüche 1 bis 6, **dadurch gekennzeichnet, dass** Sender und/oder Empfänger innerhalb des Kanals angeordnet sind oder der Kanal zumindest ein Fenster aufweist, welches für die elektromagnetische Welle transparent ist und dass der Sender und/oder der Empfänger außerhalb des Kanals positioniert sind und die elektromagnetische Welle über das Fenster in die plastifizierte Schmelze ausstrahlen bzw. die elektromagnetische Welle, die über das Fenster aus dem Kanal austritt, detektiert.

8. Spritzgießmaschine nach einem der Ansprüche 1 bis 7, **dadurch gekennzeichnet, dass** eine Auswerteeinheit, welche die vom Empfänger gemessene Strahlungsintensität auf Basis von zumindest zwei Referenzmessungen an Kunststoffen mit unterschiedlichem Spaltprodukt-Gehalt in einen IST-Spaltproduktgehalt umrechnet, vorgesehen ist.

9. Verfahren zur Bestimmung eines Spaltproduktgehaltes in einem Kunststoff für eine Spritzgießmaschine gemäß einem der vorhergehenden Ansprüche, bei dem eine Schmelze des Kunststoffes durch den Kanal geführt wird und eine vom Kunststoff reflektierte, transmittierte oder emittierte Welle erfasst wird und aus der erfassten Welle Rückschlüsse auf den Spaltproduktgehalt gezogen werden, wobei vorzugsweise die Strahlungsintensität der reflektierten, transmittierten oder emittierten Welle erfasst wird und aus der erfassten Strahlungsintensität Rückschlüsse auf den Spaltprodukt-gehalt gezogen werden.

10. Verfahren nach Anspruch 9, **dadurch gekennzeichnet, dass** der Kunststoff in dem Kanal mit einer Welle bestrahlt wird, so dass die Welle in dem Kunststoff reflektiert wird und/oder durch den Kunststoff transmittiert und die reflektierte oder die transmittierte Welle erfasst wird und aus der erfassten Welle Rückschlüsse auf den Spaltproduktgehalt gezogen werden.

11. Verfahren nach Anspruch 9 oder 10, **dadurch gekennzeichnet, dass** die Erfassung der reflektierten, transmittierten oder emittierten Welle an der Schmelze erfolgt.

12. Verfahren nach einem der Ansprüche 9 bis 11, **dadurch gekennzeichnet, dass** der Kanal in einer Spritzgießmaschine angeordnet ist.

13. Verfahren nach einem der Ansprüche 9 bis 12, **dadurch gekennzeichnet, dass** auf Basis des bestimmten Spaltproduktgehaltes die Spritzgießmaschine gestoppt oder Prozessparameter der Spritzgießmaschine variiert werden.

14. Verfahren nach einem der Ansprüche 9 bis 13, **dadurch gekennzeichnet, dass** als Schmelze Polyethylenterephthalat-Schmelze verwendet wird, wobei vorzugsweise Acetaldehyd als Spaltprodukt detektiert wird.

## Claims

1. Injection moulding machine, which has the injection moulding die elements of injection moulding screw, hot runner and mould and wherein at least one injection moulding die element has a channel for accommodating molten plastic and a receiver is provided which is formed and arranged in such a way that a wave transmitted through a plastic accommodated in the channel or a wave reflected by a plastic accommodated in the channel or a wave emitted by a plastic accommodated in the channel can be detected by the receiver, wherein the receiver is set up to measure the radiation intensity of the transmitted, reflected or emitted wave, **characterized in that** an evaluation unit is provided which is suitable for assessing the radiation intensity measured by the receiver on the basis of at least one reference measurement on a plastic with a predefined decomposition product content.

2. Injection moulding machine according to claim 1, **characterized in that** the receiver is set up to measure the radiation intensity of the transmitted, reflected or emitted wave of a predetermined frequency.

3. Injection moulding machine according to claim 1 or 2, **characterized in that** the channel has a heating device, which is designed in such a way that a molten plastic accommodated in the channel can be prevented from solidifying.

4. Injection moulding machine according to claim 1, 2 or 3, **characterized in that** a transmitter is provided which, together with the receiver, is formed and arranged in such a way that a wave can be radiated into the plastic accommodated in the channel by the transmitter and the wave transmitted through the plastic or the wave reflected by the plastic can be detected by the receiver, wherein the transmitter is preferably designed to radiate several waves with different frequencies simultaneously or one after another, and the receiver is designed to detect several waves with different frequencies simultaneously or one after another, wherein the receiver is preferably designed to detect the radiation intensities of the several waves with different frequencies simultaneously or one after another.

5. Injection moulding machine according to one of claims 1 to 4, **characterized in that** the injection moulding die element is a plasticizing or injection unit, an injection moulding screw, a hot runner or a mould with a mould cavity, wherein the channel is preferably part of the mould cavity.

6. Injection moulding machine according to one of claims 1-5, **characterized in that** the wave is an acoustic wave, preferably an ultrasonic wave, or is an electromagnetic wave, preferably an infrared wave.

7. Injection moulding machine according to one of claims 1 to 6, **characterized in that** transmitter and/or receiver are arranged inside the channel or the channel has at least one window which is transparent to the electromagnetic wave and **in that** the transmitter and/or the receiver are positioned outside the channel and, respectively, radiate the electromagnetic wave via the window into the plasticized melt or detect the electromagnetic wave which leaves the channel via the window.

8. Injection moulding machine according to one of claims 1 to 7, **characterized in that** an evaluation unit is provided which converts the radiation intensity measured by the receiver into an ACTUAL decomposition product content on the basis of at least two reference measurements on plastics with different decomposition product contents.

9. Method for determining a decomposition product content in a plastic for an injection moulding machine according to one of the preceding claims, in which a melt of the plastic is guided through the channel and a wave reflected, transmitted or emitted by the plastic is detected and conclusions about the decomposition product content are drawn from the detected wave, wherein the radiation intensity of the reflected, transmitted or emitted wave is preferably detected and conclusions about the decomposition product content are drawn from the detected radiation intensity.

10. Method according to claim 9, **characterized in that** the plastic in the channel is irradiated with a wave, with the result that the wave is reflected in the plastic and/or transmitted through the plastic and the reflected or the transmitted wave is detected and conclusions about the decomposition product content are drawn from the detected wave.

11. Method according to claim 9 or 10, **characterized in that** the detecting of the reflected, transmitted or emitted wave is effected in the melt.

12. Method according to one of claims 9 to 11, **characterized in that** the channel is arranged in an injection moulding machine.

13. Method according to one of claims 9 to 12, **characterized in that** the injection moulding machine is stopped or process parameters of the injection moulding machine are varied on the basis of the determined decomposition product content.

14. Method according to one of claims 9 to 13, **characterized in that** polyethylene terephthalate melt is used as melt, wherein acetaldehyde is preferably detected as decomposition product.

## Revendications

1. Machine de moulage par injection, laquelle présente les éléments d'outil de moulage par injection vis de moulage par injection, canal chaud et outil de forme et dans laquelle au moins un élément d'outil de moulage par injection présente un canal pour recevoir de la matière plastique fondue et un récepteur est prévu, lequel est réalisé et disposé de telle manière qu'une onde transmise par une matière plastique logée dans le canal ou une onde réfléchie par une matière plastique logée dans le canal ou une onde émise par une matière plastique logée dans le canal peut être détectée par le récepteur, le récepteur étant mis au point pour mesurer l'intensité de rayonnement de l'onde transmise, réfléchie ou émise, **caractérisée en ce qu'**est prévue une unité d'évaluation, qui est appropriée pour apprécier l'intensité de rayonnement mesurée par le récepteur, sur la base d'au moins une mesure de référence, au niveau d'une matière plastique ayant une teneur spécifiée en produit de décomposition.

2. Machine de moulage par injection selon la revendication 1, **caractérisée en ce que** le récepteur est mis au point pour mesurer l'intensité de rayonnement de l'onde, transmise, réfléchie ou émise, d'une fréquence prédéterminée.

3. Machine de moulage par injection selon la revendication 1 ou 2, **caractérisée en ce que** le canal présente un dispositif de chauffage qui est conçu de telle manière qu'il est possible d'empêcher une solidification d'une matière plastique fondue logée dans le canal.

4. Machine de moulage par injection selon la revendication 1, 2 ou 3, **caractérisée en ce qu'**est prévu un émetteur, qui est réalisé et est disposé conjointement avec le récepteur de telle manière qu'une onde peut être émise par l'émetteur dans la matière plastique logée par le canal et que l'onde transmise par la matière plastique ou réfléchie par la matière plastique peut être détectée par le récepteur, dans laquelle de préférence l'émetteur est conçu pour émettre simultanément ou successivement plusieurs ondes d'une fréquence différente, et le récepteur est conçu pour détecter simultanément ou successivement plusieurs ondes de fréquence différente, dans laquelle de préférence le récepteur est conçu pour détecter simultanément ou successivement les intensités de rayonnement des ondes multiples de fréquence différente.

5. Machine de moulage par injection selon l'une des revendications 1 à 4, **caractérisée en ce que** l'élément d'outil de moulage par injection est une unité de plastification ou d'injection, une vis de moulage par injection, un canal chaud ou un outil de forme présentant un espace de moulage, dans laquelle le canal fait de préférence partie de l'espace de moulage.

6. Machine de moulage par injection selon l'une des revendications 1 à 5, **caractérisée en ce que** l'onde est une onde acoustique, de préférence une onde ultrasonore, ou une onde électromagnétique, de préférence une onde infrarouge.

7. Machine de moulage par injection selon l'une des revendications 1 à 6, **caractérisée en ce que** l'émetteur et/ou le récepteur sont disposés à l'intérieur du canal ou le canal présente au moins une fenêtre qui est transparente pour l'onde électromagnétique, et **en ce que** l'émetteur et/ou le récepteur sont positionnés à l'extérieur du canal et émettent l'onde électromagnétique par l'intermédiaire de la fenêtre dans la matière fondue plastifiée ou détectent l'onde électromagnétique qui sort du canal par l'intermédiaire de la fenêtre.

8. Machine de moulage par injection selon l'une des revendications 1 à 7, **caractérisée en ce qu'**est prévue une unité d'évaluation qui convertit par calcul l'intensité de rayonnement mesurée par le récepteur, sur la base d'au moins deux mesures de référence, sur des matières plastiques ayant des teneurs différentes en produit de décomposition, en une teneur réelle en produit de décomposition.

9. Procédé de détermination d'une teneur en produit de décomposition dans une matière plastique pour machine de moulage par injection selon l'une des revendications précédentes, dans lequel une matière fondue de la matière plastique est guidée à travers le canal et une onde réfléchie, transmise ou émise par la matière plastique, est détectée, et la teneur en produit de décomposition est déduite de l'onde détectée, l'intensité de rayonnement de l'onde réfléchie, transmise ou émise, étant de préférence détectée et la teneur en produit de décomposition étant déduite de l'intensité de rayonnement détectée.

10. Procédé selon la revendication 9, **caractérisé en ce que** la matière plastique est irradiée par une onde dans le canal de sorte que l'onde est réfléchie dans la matière plastique et/ou est transmise par la matière plastique, et l'onde réfléchie ou l'onde transmise est détectée, et la teneur en produit de décomposition est déduite de l'onde détectée.

11. Procédé selon la revendication 9 ou 10, **caractérisé en ce que** la détection de l'onde réfléchie, transmise ou émise est effectuée au niveau de la matière fondue.

12. Procédé selon l'une des revendications 9 à 11, **caractérisé en ce que** le canal est disposé dans une machine de moulage par injection.

13. Procédé selon l'une des revendications 9 à 12, **caractérisé en ce que** la machine de moulage par injection est arrêtée ou **en ce que** des paramètres de processus de la machine de moulage par injection varient sur la base de la teneur déterminée en produit de décomposition.

14. Procédé selon l'une des revendications 9 à 13, **caractérisé en ce que** l'on utilise en tant que matière fondue de la matière fondue de téréphtalate de polyéthylène, dans lequel de l'acétaldéhyde est de préférence détecté en tant que produit de décomposition.
